# EUROPEAN PATENT APPLICATION

(11) **EP 4 451 788 A1**
(43) Date of publication of application: **23.10.2024**
(21) Application number: 22907035.4
(22) Date of filing: 26.10.2022
(51) Int. Cl.: H04W 76/15, G05D 1/00, G05D 1/02, H04W 4/44, H04W 88/06

(54) **MOBILE TERMINAL, RADIO COMMUNICATION SYSTEM, AND COMMUNICATION CONTROL PROGRAM**

(30) Priority: 17.12.2021 JP 2021204802
(71) Applicant: KONICA MINOLTA, INC., Tokyo 100-7015 (JP)
(72) Inventor: ASAMOTO, Noriaki, Tokyo 100-7015 (JP)
(74) Representative: Hoffmann Eitle
(86) International application number: PCT/JP2022/039872
(87) International publication number: WO 2023/112501

(57) **Abstract**

A mobile terminal 100 that moves while communicating with an external includes a connection section 101 that connects to a plurality of wireless networks 500 simultaneously, a receiver that receives data from the plurality of wireless networks 500 connected by the connection section 101, and a processor 103 that processes only data received first when the same data is received from the plurality of wireless networks 500.

## Description

### Technical Field

The present invention relates to a mobile terminal, a wireless communication system, and a communication control program.

### Background Art

In recent years, as a remote control technology for a mobile terminal, there is a technology for connecting a mobile terminal to a network by wireless communication and remotely controlling the mobile terminal via the network.

Conventionally, as a technology for connecting a mobile terminal to a network, for example, Patent Literature 1 exists. Patent Literature 1 discloses a roaming control device for performing roaming between a private communication network such as a personal handy-phone system (PHS) and a telecommunications carrier communication network such as long term evolution (LTE) or between a plurality of private communication networks.

### Citation List

### Patent Literature

Patent Literature 1: JP 2018-14610 A

### Summary of Invention

### Technical Problem

In the conventional technology, roaming between a private communication network and a telecommunications carrier communication network is enabled. However, there has been a problem that communication interruption occurs due to handover or roaming at the time of switching from the private communication network to the telecommunications carrier communication network or vice versa, thus causing a delay in acquisition of data.

Therefore, an object of the present invention is to provide a mobile terminal, a wireless communication system, and a communication control program that do not cause a delay or cause a short delay in acquisition of data when the mobile terminal moves between a plurality of networks.

### Solution to Problem

The above-described object of the present invention is achieved by the following means.

(1) A mobile terminal that moves while wirelessly communicating with an external device, the mobile terminal including:
   a connection section that connects to a plurality of wireless networks simultaneously;
   a receiver that receives data regarding the movement of the mobile terminal from the plurality of wireless networks connected by the connection section; and
   a processor that executes only the data received first for the same data received via the plurality of wireless networks.
(2) The mobile terminal according to (1), wherein the data includes at least one of a command for moving the mobile terminal and data for autonomous movement.
(3) The mobile terminal according to (1) or (2), wherein
   the data includes time-series information given at a time of transmission of the data, and
   the processor executes the data based on the time-series information without duplicating the data.
(4) The mobile terminal according to (3), wherein the time-series information includes a time stamp or a sequence number.
(5) The mobile terminal according to (3) or (4), wherein when the data that does not include the time-series information is received, the processor immediately executes the data.
(6) The mobile terminal according to any one of (1) to (5), wherein the data is at least one of remote control data for remotely controlling the mobile terminal and autonomous movement data for autonomous movement of the mobile terminal.
(7) The mobile terminal according to any one of (1) to (6), wherein
   the processor generates a data request for the mobile terminal to autonomously move and includes a transmitter that transmits the data request to the plurality of wireless networks connected by the connection section, and
   the data request includes time-series information.
(8) A wireless communication system including:
   the mobile terminal according to any one of (1) to (7),
   a plurality of wireless networks including a wireless communication station; and
   an information processing apparatus connected to the wireless networks.
(9) The wireless communication system according to (8), wherein the information processing apparatus transmits the same data to the plurality of wireless networks.
(10) The wireless communication system according to (8) or (9), wherein the wireless networks include a neighboring apparatus that relays communication between the mobile terminal and the information processing apparatus.
(11) The wireless communication system according to (10), wherein the neighboring apparatus transmits data originated from the neighboring apparatus to the mobile terminal.
(12) The wireless communication system according to any one of (8) to (11), further including a distribution server that copies the data transmitted by the information processing apparatus and transmits the copied data to the mobile terminal, wherein
   the distribution server is connected to the plurality of wireless networks and transmits the same data to the plurality of wireless networks.
(13) The wireless communication system according to (10), wherein
   a mobile object management server that performs authentication necessary for the mobile terminal and the information processing apparatus and/or the neighboring apparatus to connect to each other is connected to the wireless networks,
   the mobile terminal registers connection information indicating the connection to the plurality of wireless networks in the mobile object management server that has performed the mutual authentication, and the information processing apparatus or the neighboring apparatus acquires the connection information from the mobile object management server, performs mutual authentication with the mobile terminal, and connects to the mobile terminal.
(14) A communication control program for a mobile terminal that moves while wirelessly communicating with an external device, the communication control program causing a computer to execute:
   (a) connecting to a plurality of wireless networks simultaneously;
   (b) receiving data regarding the movement of the mobile terminal from the plurality of wireless networks connected by (a); and
   (c) executing only the data received first for the same data received via the plurality of wireless networks.
(15) The communication control program according to (14), wherein the data includes at least one of a command for moving the mobile terminal and data for autonomous movement.
(16) The communication control program according to (14) or (15), wherein the data includes time-series information given at a time of transmission of the data, and (c) executes the data based on the time-series information without duplicating the data.
(17) The communication control program according to (16), wherein the time-series information includes a time stamp or a sequence number.
(18) The communication control program according to (16) or (17), wherein when the data that does not include the time-series information is received, (c) immediately executes the data.
(19) The communication control program according to any one of (14) to (18), wherein the data is at least one of remote control data for remotely controlling the mobile terminal and autonomous movement data for autonomous movement of the mobile terminal.
(20) The communication control program according to any one of (14) to (19), further including:
   (d) generating a data request for the mobile terminal to autonomously move; and
   (f) transmitting the data request to the plurality of wireless networks connected by (a), wherein the data request includes time-series information.

### Advantageous Effects of Invention

The mobile terminal of the present invention simultaneously connects to a plurality of wireless networks and executes data acquired first. Thus, when the mobile terminal moves, the mobile terminal can acquire and execute the data because connection to a wireless network at a movement destination is established before communication with a wireless network at a movement source is disconnected. Therefore, according to the present invention, even when the mobile terminal moves between a plurality of wireless networks, no delay or a short delay occurs in acquisition of data.

### Brief Description of Drawings

Fig. 1 is a schematic diagram illustrating a configuration of a wireless communication system according to an embodiment.
Fig. 2 is a block diagram illustrating functions of a mobile terminal.
Fig. 3 is a block diagram for illustrating further detailed functions of a controller.
Fig. 4 is a flowchart for illustrating a procedure of communication control by a time stamp method.
Fig. 5 is a flowchart for illustrating a procedure of communication control by a sequence number method.
Fig. 6 is an explanatory diagram for illustrating an example of a process by the mobile terminal.
Fig. 7 is a time chart for illustrating roaming and handover.
Fig. 8A is an explanatory diagram for illustrating a first communication pattern performed between a remote control terminal and the mobile terminal.
Fig. 8B is an explanatory diagram for illustrating the first communication pattern performed between the remote control terminal and the mobile terminal.
Fig. 8C is an explanatory diagram for illustrating the first communication pattern performed between the remote control terminal and the mobile terminal.
Fig. 8D is an explanatory diagram for illustrating the first communication pattern performed between the remote control terminal and the mobile terminal.
Fig. 9A is an explanatory diagram for illustrating a second communication pattern performed between the remote control terminal and the mobile terminal.
Fig. 9B is an explanatory diagram for illustrating the second communication pattern performed between the remote control terminal and the mobile terminal.

### Description of Embodiments

Hereinafter, embodiments of the present invention will be described in detail with reference to the drawings. Note that in the description of the drawings, the same components are denoted by the same reference signs, and redundant descriptions are omitted. In addition, dimensional ratios in the drawings are exaggerated for convenience of description and may be different from actual ratios.

### (Wireless communication system)

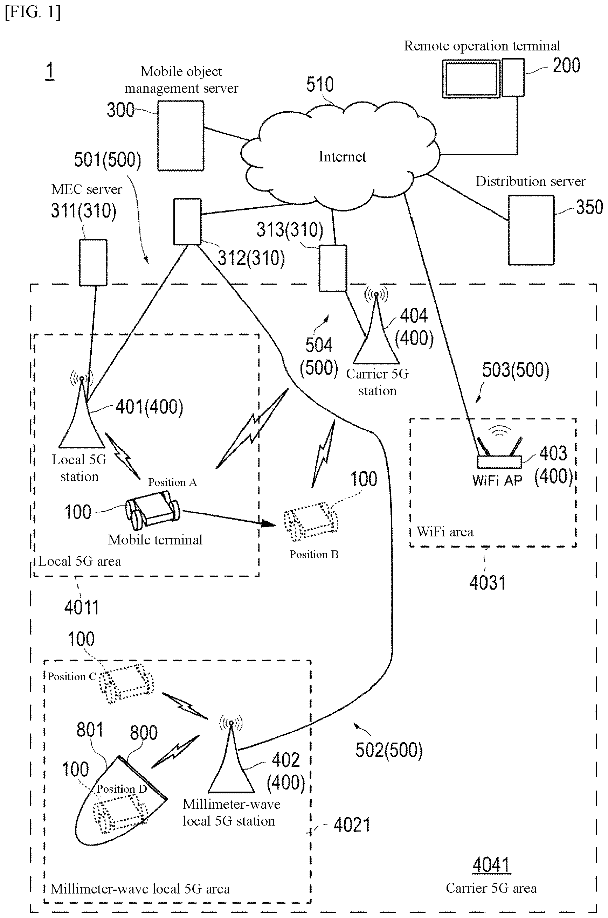

Fig. 1 is a schematic diagram illustrating a configuration of a wireless communication system according to an embodiment.

As illustrated in Fig. 1, the wireless communication system 1 according to the embodiment includes a mobile terminal 100, a remote control terminal 200, a mobile object management server 300, multi-access edge computing (MEC) servers 310 (311 to 313), a distribution server 350, and a plurality of wireless communication stations 400 (401 to 404).

The plurality of MEC servers 310 are a first MEC server 311, a second MEC server 312, and a third MEC server 313. The first MEC server 311 to the third MEC server 313 are referred to as the MEC servers 310 when they are not distinguished from each other (including a case of indicating any one of them without distinguishing between them, the same applies hereinafter) or when they are collectively referred to.

The plurality of wireless communication stations 400 are a private 5G wireless communication base station (local 5G station 401 (other than millimeter wave)), a private 5G wireless communication base station (millimeter-wave local 5G station 402) using a millimeter wave, a WiFi access point (WiFi AP 403), and a 5G wireless communication base station (carrier 5G station 404) of a telecommunications carrier. The local 5G station 401, the millimeter-wave local 5G station 402, the WiFi AP 403, and the carrier 5G station 404 are referred to as the wireless communication stations 400 when they are not distinguished from each other or when they are collectively referred to.

The remote control terminal 200, the mobile object management server 300, the second MEC server 312, the third MEC server 313, and the distribution server 350 are connected to the Internet 510.

In the wireless communication system 1, the first MEC server 311 and the second MEC server 312 are connected to the local 5G station 401, and they constitute a local 5G network 501.

The second MEC server 312 is connected to the millimeter-wave local 5G station 402, and they constitute a millimeter-wave local 5G network 502.

The WiFi AP 403 directly connected to the Internet 510 constitutes a WiFi network 503.

The third MEC server 313 is connected to the carrier 5G station 404, and they constitute a carrier 5G network 504.

Therefore, the wireless communication system 1 includes the plurality of wireless networks.

The local 5G network 501, the millimeter-wave local 5G network 502, the WiFi network 503, and the carrier 5G network 504 are referred to as networks 500 when they are not distinguished from each other or when they are collectively referred to. Furthermore, the networks 500 include the Internet 510 unless otherwise particularly distinguished.

As illustrated in Fig. 1, the communicable range of the local 5G station 401 is a local 5G area 4011. Similarly, the communicable range of the millimeter-wave local 5G station 402 is a millimeter-wave local 5G area 4021, the communicable range of the WiFi AP 403 is a WiFi area 4031, and the communicable range of the carrier 5G station 404 is a carrier area 4041.

The carrier area 4041 includes a range in which the local 5G area 4011, the millimeter-wave local 5G area 4021, and the WiFi area 4031 overlap. An obstacle 800 is present in the millimeter-wave local 5G area 4021. In a case where the obstacle is present, a range 801 that a millimeter wave cannot reach occurs due to characteristics of the millimeter wave.

The configurations of the networks 500 are not particularly limited as long as the remote control terminal 200 and the mobile terminal 100 can communicate with each other in some form. Further, there is a case where the two cannot be directly connected, depending on the configurations of the networks 500. For example, when the mobile terminal 100 is present in a private (local) network 500, a private IP address that is valid only in the network 500 is assigned to the mobile terminal 100. In such a case, the remote control terminal 200 connected to the Internet 510, which is a global network, cannot transmit a data packet to the mobile terminal 100 even when the private IP address of the mobile terminal 100 is designated. In this case, a router present in the local 5G network 501 forwards the packet to the private IP address of the mobile terminal 100, whereby the packet is transmitted.

Further, in the case of a mobile IP address, the remote control terminal 200 cannot grasp an IP address (care-of address) that is assigned to the mobile terminal 100 and is in a network 500 at a movement destination. In this case, a home agent to which an invariable home address is assigned may be prepared, the remote control terminal 200 may transmit a packet to the home address, and the home agent may receive the packet and transfer the packet to the mobile terminal 100.

A plurality of communication sessions may be directly established between the remote control terminal 200 and the mobile terminal 100, or the distribution server 350 may be used to substitute for data distribution to a plurality of communication paths.

The number of distribution servers 350 may be one as illustrated in Fig. 1, or a plurality of distribution servers 350 may be disposed although not illustrated. The distribution server 350 may be present on the remote control terminal 200 side as viewed from the Internet 510 or may be present on the mobile terminal 100 side as viewed from the Internet 510 and be directly connected to the networks 500. The distribution server 350 is disposed at an optimal position in consideration of latency, stability of communication, and the like. The distribution server 350 receives data from the remote control terminal 200 and stores a copy of the data. The distribution server 350 transmits the copied data to the mobile terminal 100. At this time, the distribution server 350 transmits the data to the plurality of networks.

When handling a small amount of data such as remote control data (command), the distribution server 350 uses, for example, a message queuing telemetry transport (MQTT) protocol. An MQTT broker (broker) is implemented on the data distribution side (the distribution server 350 in this case), and an MQTT client (client) is implemented on the data transmission/reception terminal side (the remote control terminal 200 and the mobile terminal 100 in this case). In addition, a client that is a transmission side is referred to as a publisher, and a client that is a reception side is referred to as a subscriber. For example, in a case where the remote control terminal 200 transmits remote control data (command) to the mobile terminal 100, the remote control terminal 200 is the publisher and the mobile terminal 100 is the subscriber. In a case where the mobile terminal 100 transmits status data to the remote control terminal 200, the mobile terminal 100 is the publisher and the remote control terminal 200 is the subscriber.

When the remote control terminal 200 (MQTT client) transmits (publishes) data to the distribution server 350 using this protocol, data based on registered information (topic) is copied and distributed to a plurality of mobile terminals 100 (MQTT clients) registered (for subscription) in the distribution server 350 (MQTT broker). Furthermore, the distribution servers 350 (MQTT brokers) are connected (bridged) as necessary, and data is transferred.

That is, in the present embodiment, by using the MQTT protocol, a path is established from the remote control terminal 200 (MQTT client) to the distribution server 350 (MQTT broker), the plurality of networks, and the mobile terminal 100 (MQTT client). Next, one piece of data is transmitted from the remote control terminal 200 to the MQTT broker, and a plurality of pieces of the data are generated by the MQTT broker and distributed to the mobile terminal 100.

Here, it is assumed that the remote control terminal 200 transmits remote control data (command) to the mobile terminal 100 via two paths, the local 5G network 501 and the carrier 5G network 504.

First, a path from the mobile terminal 100 to the remote control terminal 200 is determined using a request for connection from the mobile terminal 100 to the remote control terminal 200 as a trigger. This path may be selected from among paths statically created in advance, or may be dynamically generated. In accordance with the path, the MQTT client of the mobile terminal 100 registers (for subscription) a topic representing the remote control data (command) in the MQTT broker of the distribution server 350. Furthermore, a bridge is set so that data is transferred between MQTT brokers as necessary. These settings are performed for each communication path.

When remote control data (command) is transmitted (published) from the remote control terminal 200 (MQTT client) to the distribution server 350, the remote control data (command) is copied in the distribution server 350 and is distributed to the local 5G network 501 and the carrier 5G network 504 simultaneously. Thus, the remote control data (command) can reach the mobile terminal 100 (MQTT client) through the two paths.

Also in a case where status data is transmitted from the mobile terminal 100 to the remote control terminal 200, communication over a plurality of paths is enabled by performing a procedure similar to that described above.

Here, the MQTT broker is implemented in the distribution server 350, but the MQTT broker may be implemented in the MEC servers 310 such that the MEC servers 310 have the function of the distribution server.

Details of the mobile terminal 100 will be described later, but in brief, the mobile terminal 100 can be connected to the plurality of networks 500 simultaneously. The mobile terminal 100 processes data acquired via the networks 500 and is remotely controlled. In addition, the mobile terminal 100 may process data acquired via the networks 500 and autonomously move. The mobile terminal 100 is, for example, an automatic guided vehicle (AGV), a movable robot, an aerial drone, an underwater or water surface drone, or the like. In addition, the mobile terminal 100 may be, for example, a smartphone or a tablet computer that is attached to a vehicle or the like and controls the vehicle. The mobile terminal 100 may include a night vision camera, an infrared camera (including a thermo camera), and other sensors in addition to a visible light camera that captures an image with visible light. Furthermore, the mobile terminal 100 may include a display for displaying information to surrounding people.

### (Remote control terminal)

The remote control terminal 200 is an information processing apparatus for remotely controlling the mobile terminal 100. Furthermore, the remote control terminal 200 is an information processing apparatus that instructs the autonomously moving mobile terminal 100 about a movement route and the like.

The remote control terminal 200 is connected to the Internet 510. Furthermore, the remote control terminal 200 may be directly connected to the networks 500 other than the Internet 510 and to the MEC servers 310, the distribution server 350, and the like.

In the case of remote control, the remote control terminal 200 transmits a command regarding an operation to the mobile terminal 100 in real time. The command is remote control data for remotely controlling the mobile terminal 100. Data that is transmitted from the remote control terminal 200 to the mobile terminal 100 is transmitted to the mobile terminal 100 via the network 500. For this purpose, the remote control terminal 200 transmits one piece of data to the plurality of networks. Alternatively, the data may be transmitted to the distribution server 350 via the Internet 510 or directly, and may be transmitted from the distribution server 350 to the mobile terminal 100. In a case where the data is transmitted from the distribution server 350 to the mobile terminal 100, the distribution server 350 may be an information processing apparatus.

Similarly, data that is transmitted from the mobile terminal 100 to the remote control terminal 200 is also transmitted via the network 500.

When the mobile terminal 100 autonomously moves, the remote control terminal 200 uploads autonomous movement data necessary for the autonomous movement to the mobile terminal 100. The autonomous movement data transmitted from the remote control terminal 200 is transmitted to the mobile terminal 100 via the network 500. Furthermore, the remote control terminal 200 receives a response or a request from the mobile terminal 100, and further data such as a video. The data transmitted from the mobile terminal 100 is transmitted to the remote control terminal 200 via the network 500.

The autonomous movement data may be uploaded from the remote control terminal 200 to the mobile object management server 300 and/or the MEC servers 310 via the Internet 510. The autonomous movement data may be transmitted to the distribution server 350 via the Internet 510 or directly, and may be transmitted from the distribution server 350 to the mobile terminal 100. In a case where the data is transmitted from the distribution server 350 to the mobile terminal 100, the distribution server 350 may be an information processing apparatus.

The autonomous movement data is, for example, a map of a movement range, a movement route, and operation contents during movement.

The remote control terminal 200 may wirelessly communicate with the mobile terminal 100 directly without involving the network 500. In that case, the remote control terminal 200 functions as one of the wireless communication stations 400, and the individual local 5G network 501 is formed between the remote control terminal 200 and the mobile terminal 100.

Further, the remote control terminal 200 may be connected to another network 500 connected via the Internet 510 to the network 500 to which the mobile terminal 100 is currently connected, or may be connected to the same network 500 to which the mobile terminal 100 is currently connected. The same applies to the mobile object management server 300, which may be located anywhere as long as the mobile object management server 300 can be accessed from the remote control terminal 200 and the mobile terminal 100.

### (Mobile object management server)

The mobile object management server 300 performs authentication for connecting communication with the mobile terminal 100 and the remote control terminal 200.

The mobile object management server 300 is a cloud server connected to the Internet 510. The mobile object management server 300 stores communication information necessary for communication with the remote control terminal 200, the mobile object management server 300, the MEC servers 310, and the mobile terminal 100. Specifically, for example, identification codes (internet protocol (IP) addresses, media access control (MAC) addresses, universally unique identifiers (UUIDs) of edge devices, or the like) of the remote control terminal 200, the mobile object management server 300, the MEC servers 310, and the mobile terminal 100 are stored. Here, the edge devices are IoT devices including the mobile terminal 100. The communication information stored varies depending on the configurations of the networks 500, a communication mode between the wireless communication stations 400 and the remote control terminal 200, a communication mode between the wireless communication stations 400 and the mobile terminal 100, and the like.

The mobile terminal 100 registers connection information indicating connection to the plurality of networks 500 in the mobile object management server 300 that has performed the mutual authentication. The remote control terminal 200 or the MEC server 310 acquires the connection information from the mobile object management server 300, performs mutual authentication with the mobile terminal 100, and connects to the mobile terminal 100.

In addition, the mobile object management server 300 may store information necessary for autonomous movement. Further, the mobile object management server 300 may be directly connected to the networks 500 other than the Internet 510 without involving the Internet 510. In that case, the mobile object management server 300 may be connected to another network 500 or the Internet 510 via the connected network 500.

Furthermore, the mobile object management server 300 is not limited to a cloud server. The mobile object management server 300 may wirelessly communicate directly with the mobile terminal 100 without involving the networks 500. In that case, the mobile object management server 300 functions as one of the plurality of wireless communication stations 400, and the individual local 5G network 501 is formed between the mobile object management server 300 and the mobile terminal 100.

The mobile object management server 300, the remote control terminal 200, and the mobile terminal 100 may be connected to the same network 500. The mobile object management server 300, the remote control terminal 200, and the mobile terminal 100 may be connected to different networks 500, and the networks to which they are connected may be connected to each other via a dedicated line or the Internet 510.

Note that the connection and authentication between the mobile terminal 100 and the remote control terminal 200 may be mutually performed by at least one or both of the mobile terminal 100 and the remote control terminal 200. In such a case, the mobile object management server 300 may not be provided.

### (MEC servers)

Each of the MEC servers 310 is disposed in any of the plurality of networks 500. Each of the MEC servers 310 is a neighboring apparatus for relaying communication between the mobile terminal 100 and the remote control terminal 200 or the mobile object management server 300.

In the present embodiment, the MEC servers 310 are located in front of the Internet 510 when viewed from the mobile terminal 100 on a communication path. Different communication sessions may be established between the remote control terminal 200 and the MEC servers 310 and between the MEC servers 310 and the mobile terminal 100. Therefore, when a communication session is not directly established between the mobile terminal 100 and the remote control terminal 200 or the mobile object management server 300, transmission and reception of data are performed via one of the MEC servers 310 on the communication path.

The MEC server 310 transmits, to the mobile terminal 100 via the wireless communication stations 400 in real time, data transmitted from the remote control terminal 200 or the mobile object management server 300.

Furthermore, when the mobile terminal 100 cannot process all the data, the MEC server 310 processes the data as a substitute. For example, in a case where CPU power is insufficient in the mobile terminal 100 when the mobile terminal 100 performs image analysis using AI, the mobile terminal 100 transmits image data to the MEC server 310. The MEC server 310 performs the image analysis on the image data using AI, and transmits (returns) the result to the mobile terminal 100.

Furthermore, the MEC server 310 may transmit the data to the mobile terminal 100 based on an individual processing result. In this case, the origin of the data is the MEC server 310. The individual data includes an emergency stop command. The transmission of the emergency stop command is executed, for example, when a signal normally transmitted from the mobile terminal 100 is stopped, when an abnormality is detected in the movement range of the mobile terminal 100, when a signal indicating an abnormality is issued from the mobile terminal 100, or the like. When these abnormalities occur, the MEC server 310 transmits an emergency stop command to the mobile terminal 100 without transmitting these abnormalities to the remote control terminal 200. Therefore, in the present embodiment, it is possible to quickly stop the mobile terminal 100 without waiting for an instruction from the remote control terminal 200.

The emergency stop command is issued, for example, when it is detected that a person is approaching the mobile terminal 100 as a result of image analysis of image data by AI installed in the MEC server 310. At this time, the image data is transmitted to the MEC server 310, for example, from the mobile terminal 100 or a camera capturing an image of the movement range of the mobile terminal 100.

In a case where the image data is processed in the remote control terminal 200, it takes time to transmit and process the image data and to transmit a result of analyzing the image data. Meanwhile, the MEC server 310 located in the vicinity of the mobile terminal 100 can shorten at least the data transmission time. Therefore, the emergency stop can be more promptly performed by causing the MEC server 310 to determine the emergency stop.

Note that the MEC server 310 is not necessarily provided on a communication path between the remote control terminal 200 and the mobile terminal 100. The MEC server 310 may be connected to at least one network, for example, like the first MEC server 311 illustrated in Fig. 1. In this case, the first MEC server 311 may not relay the data from the remote control terminal 200.

The MEC servers 310 may not be provided on a physical route connecting the remote control terminal 200 and the mobile terminal 100. For example, the MEC servers 310 may be directly connected to the remote control terminal 200 without involving the networks 500. The MEC servers 310 may be directly connected to the mobile object management server 300 without involving the networks 500.

### (Wireless communication stations)

The plurality of wireless communication stations 400 may be connected to the same network 500 or different networks 500. In addition, any of the wireless communication stations 400 may be directly connected to the remote control terminal 200 or the mobile object management server 300. Each of the wireless communication stations 400 is operated for each wireless communication mode. For example, the local 5G station 401 is used in a predetermined range of a user. Among the local 5G stations 401, the millimeter-wave local 5G station 402 uses a millimeter wave and thus is used in a range with higher speed and directivity. The WiFi AP 403 is connected to the network 500 via a local area network (LAN) or the like. The WiFi AP 403 is used in a range narrower than 5G. The carrier 5G station 404 can be used by anyone by subscribing like a cellular phone. However, the communication speeds and the communicable ranges of the wireless communication stations 400 vary depending on the system configurations of the wireless communication stations 400.

### (Mobile terminal)

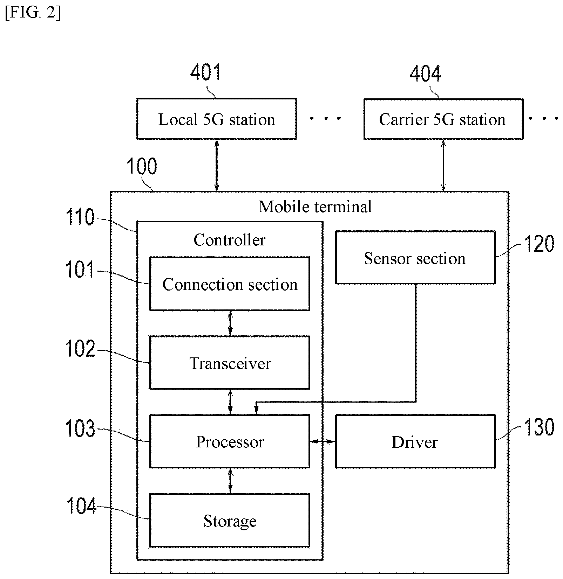

Fig. 2 is a block diagram for illustrating functions of the mobile terminal 100. The mobile terminal 100 includes a controller 110, a sensor section 120, and a driver 130. Fig. 2 illustrates the local 5G station 401 and the carrier 5G station 404 as the wireless communication stations 400, and the other wireless communication stations 400 are omitted.

Although details of each component will be described, details of the controller 110 will be described later.

The sensor section 120 includes, for example, sensors such as a camera and a positioning sensor. A video of the camera may be transmitted to the remote control terminal 200 or the MEC server 310. Furthermore, as described above, the video may be subjected to image analysis by AI on the MEC server 310 or the mobile terminal 100 and may be used to determine the operation of the mobile terminal 100.

The positioning sensor is used to determine the position of the mobile terminal 100 when the mobile terminal 100 autonomously moves. When the mobile terminal 100 does not autonomously move only by remote control, the mobile terminal 100 transmits the current position to the remote control terminal 200 based on a signal from the positioning sensor.

As the positioning sensor, for example, a global navigation satellite system (GNSS) may be used. In addition, as the positioning sensor, laser imaging detection and ranging (LiDAR), an ultra wide band (UWB), or the like may be used. Note that when the mobile terminal 100 does not autonomously move by only remote control, the positioning sensor may not be provided.

The driver 130 includes a motor and a gear mechanism required for moving the mobile terminal 100. The driver 130 operates the motor, the gear mechanism, and the like under control by the controller 110. The configuration of the driver 130 varies depending on the configuration of the mobile terminal 100.

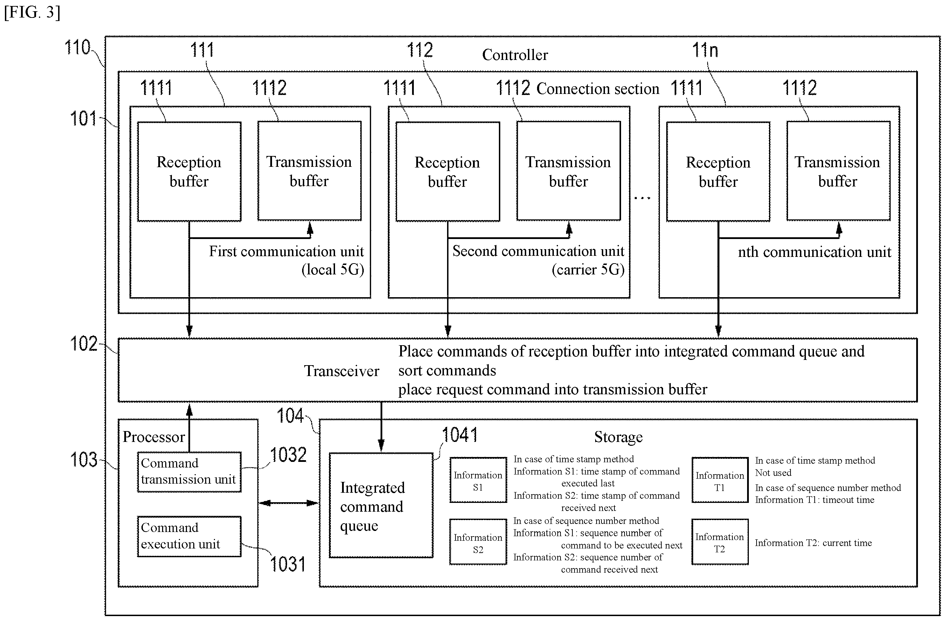

The controller 110 includes a connection section 101, a transceiver 102, a processor 103, and a storage 104. Fig. 3 is a block diagram for illustrating further detailed functions of the controller 110.

The connection section 101 connects to the plurality of wireless communication stations 400 simultaneously. For this purpose, the connection section 101 includes a plurality of communication units as illustrated in Fig. 3. In the present embodiment, the plurality of communication units are a first communication unit 111, a second communication unit 112, and an nth communication unit 11n.

The plurality of communication units are provided such that the communication units can be simultaneously connected to at least two networks 500. Each of the communication units is provided in accordance with a communication mode in which the communication unit is connected. For example, when there is a possibility of simultaneous connection to a plurality of 5G wireless communication stations 400, a plurality of communication units compatible with 5G are provided. When there is a possibility of simultaneous connection to a 5G wireless communication station 400 and the WiFi AP 403, a communication unit compatible with 5G and a communication unit compatible with the WiFi AP 403 are provided. Furthermore, the mobile terminal 100 includes an antenna connected to each of the communication units. The antenna is provided in accordance with a wavelength band of a radio wave used by a wireless communication station 400 that may be connected.

In the present embodiment, as illustrated in Fig. 3, the first communication unit 111 is compatible with the local 5G station 401, the second communication unit 112 is compatible with the carrier 5G station 404, and the nth communication unit 11n is compatible with the other wireless communication stations 400.

Each of the communication units includes a reception buffer 1111 and a transmission buffer 1112. The reception buffer 1111 temporarily stores data received from the connected wireless communication station 400. The transmission buffer 1112 temporarily stores data to be transmitted.

The transceiver 102 receives data via the plurality of networks 500 connected by the connection section 101 (a function of a receiver). Further, the transceiver 102 transmits data via the plurality of networks 500 connected by the connection section 101 (a function of a transmitter).

After the connection to any one of the networks 500 is established, the transceiver 102 creates an integrated command queue 1041. The integrated command queue 1041 is created in the storage 104.

When data is temporarily stored in the reception buffers 1111 of the respective communication units, the transceiver 102 extracts the data from the reception buffers 1111. The transceiver 102 places the extracted data into the integrated command queue 1041 in the order in which the data has been received. Commands placed in the integrated command queue 1041 are sorted based on the time-series information (the sorting will be described later).

The processor 103 processes the data placed in the integrated command queue 1041 in the order in which the data is arranged. Therefore, when receiving the same data from the plurality of wireless communication stations 400, the processor 103 processes only the data received first. In order to process data from the remote control terminal 200, the processor 103 includes a command execution unit 1031. The command execution unit 1031 executes a command received first.

In order that only the command received first is executed, the processor 103 uses the time-series information given to the command. As the time-series information, for example, a time stamp or a sequence number is used.

In a case where a times tamp is used (referred to as a time stamp method), the processor 103 (the command execution unit 1031 in this case) stores, as information S1, a time stamp of a command executed last. The processor 103 also stores, as information S2, a time stamp of a next command acquired from the integrated command queue 1041. The time stamp describes the time at which the remote control terminal 200 transmitted the command. In addition, the processor 103 compares the information S1 with the information S2, and does not execute the information S2 received later in a case where the information S2 indicates the same time as the information S1 or indicates an earlier time than the information S1.

On the other hand, in a case where a sequence number is used (referred to as a sequence number method), the processor 103 (the command execution unit 1031 in this case) stores, as the information S1, a sequence number of a command to be executed next. Furthermore, the processor 103 stores, as the information S2, a sequence number of a command received immediately before. Then, the processor 103 compares the information S1 with the information S2. The processor 103 executes the command when the information S1 and the information S2 are the same, and does not execute the information S2 received later in other cases. In the case of the sequence number method, a timeout time may be further stored as information T1, and a current time may be stored as information T2. Then, the processor 103 compares the information T1 with the information T2, and does not execute the received command when T2 passes T1 which is the timeout time (or when T2 becomes the same as T1). Note that a procedure of these processes will be described later.

Furthermore, the processor 103 transmits various kinds of data in accordance with a processing result of the processor 103 or received data (command). The data to be transmitted is generated by, for example, a command transmission unit 1032. The command transmission unit 1032 places the generated data, for example, a data request command or the like into the transceiver 102. As a function of the transmitter, the transceiver 102 converts data to be transmitted into data in a transmittable data format (for example, a packet). The transceiver 102 places data to be transmitted into the transmission buffer 1112 of the connection section 101. The connection section 101 transmits the data in the transmission buffer 1112 to the remote control terminal 200 or the mobile object management server 300 via the connected network 500. At this time, when a plurality of networks 500 are connected, the connection section 101 transmits the same data to all the networks 500.

The functions of the controller 110 as described above are implemented by the communication units and a computer. As is well known, the computer includes a central processing unit (CPU) serving as an arithmetic element, a read only memory (ROM) and a random access memory (RAM) serving as the storage 104, and the like. As the storage 104 used for communication control, a RAM capable of operating at high speed is used.

Furthermore, the storage 104 may include, for example, a nonvolatile memory such as embedded MultiMediaCard (eMMC), a solid state drive (SSD), or a hard disk drive (HDD). Furthermore, the storage 104 may include a portable storage medium such as a memory card. These nonvolatile memories are used, for example, for storage of a program required for communication control and other processing and storage of data required to be saved.

The computer may include a general-purpose CPU, a ROM, a RAM and the like, and may execute a communication function and various types of processing by the software (program). In addition, the computer may be a computer in which various processes are incorporated in hardware such as a system on chip (SoC) or a field programmable gate array (FPGA).

### (Procedure of communication control)

A procedure of communication control of the present embodiment will be described. Also in the following procedure of communication control, either the time stamp method or the sequence number method is used as the time-series information.

### (Time stamp method)

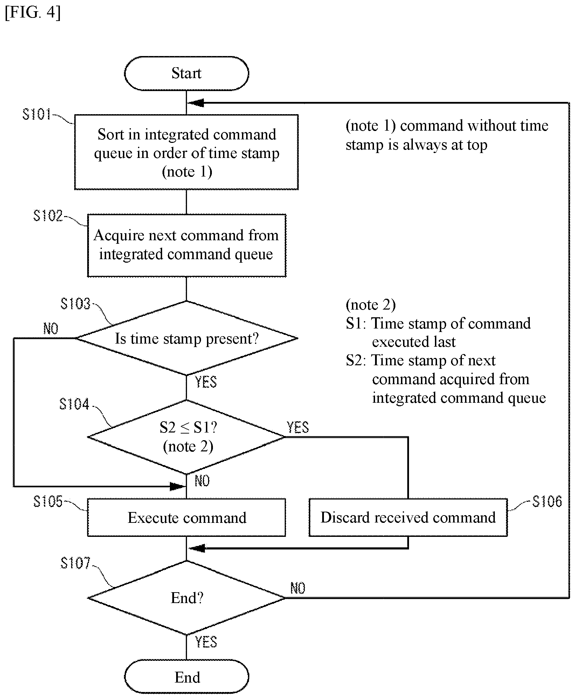

Fig. 4 is a flowchart for illustrating a procedure of communication control by the time stamp method. The communication control is performed by the controller 110 executing the program created according to the procedure described here.

First, in the controller 110, the connection section 101 connects to the plurality of networks 500 via the nearest wireless communication station 400 by the plurality of communication units. The connection section 101 places a received command into the integrated command queue 1041. At this time, a time stamp given to the command is also stored together with the command. The connection operation by the connection section 101 is executed in parallel with processing of the processor 103 that will be described later.

The connection operation is executed as follows. A remote operator operates the remote control terminal 200 to cause the mobile object management server 300 to store necessary information such as connection information indicating the connection to the mobile terminal 100 and authentication information. The mobile terminal 100 also causes the mobile object management server 300 to store connection information indicating the connection to the remote control terminal 200, authentication information, and the like.

The remote operator operates the remote control terminal 200, acquires the connection information or the like of the mobile terminal 100 from the mobile object management server 300, and attempts to connect to the mobile terminal 100. In response to this, the mobile terminal 100 makes an inquiry to the mobile object management server 300 to authenticate the remote operator and authorize the connection (the remote control terminal 200 may be authenticated). Furthermore, the authentication procedure may be performed directly between the mobile terminal 100 and the remote operator or the remote control terminal 200 without involving the networks 500.

Then, the controller 110 executes the authentication operation in accordance with preset connection priorities of the wireless communication stations 400. Thus, the mobile terminal 100 connects to the wireless communication stations 400 connectable at the current position by the determined number of simultaneous connections (the number of connected channels).

For example, when the number of simultaneous connections is three (the same applies hereinafter) and the current position of the mobile terminal 100 is a position A illustrated in Fig. 1, the mobile terminal 100 connects to both the local 5G station 401 and the carrier 5G station 404 simultaneously due to the authentication operation. Therefore, in this state, the mobile terminal 100 is connected to both the carrier 5G network 504 and the local 5G network 501.

When a radio wave condition changes due to movement of the mobile terminal 100 or the like, the controller 110 executes connection to a connectable wireless communication station 400 in accordance with the radio wave condition.

For example, when the mobile terminal 100 moves to a position B illustrated in Fig. 1, the connection between the mobile terminal 100 and the local 5G station 401 is disconnected. However, the connection between the mobile terminal 100 and the carrier 5G station 404 is maintained.

Further, for example, when the mobile terminal 100 moves from the position A to a position C illustrated in Fig. 1, the connection between the mobile terminal 100 and the local 5G station 401 is disconnected during the movement. However, the connection between the mobile terminal 100 and the carrier 5G station 404 is maintained. Then, the controller 110 performs authentication with the millimeter-wave local 5G station 402 and connects to the millimeter-wave local 5G station 402. Therefore, in this state, the mobile terminal 100 is connected to both the carrier 5G network 504 and the millimeter-wave local 5G network 502.

Furthermore, when the mobile terminal 100 moves to a position D illustrated in Fig. 1, the connection between the mobile terminal 100 and the millimeter-wave local 5G station 402 is disconnected. However, the connection between the mobile terminal 100 and the carrier 5G station 404 is maintained.

Note that the mobile object management server 300 periodically inquires whether the mobile terminal 100 is connected via a communication path registered by the mobile terminal 100, or monitors a connection state by receiving a KeepAlive signal from the mobile terminal 100. The mobile object management server 300 deletes the connection information registered by the mobile terminal 100 when confirming that there is no connection for a fixed time.

The remote operator operates the remote control terminal 200 while viewing video data transmitted with the least delay among pieces of video data transmitted from the mobile terminal 100 via the plurality of networks 500 to which connection has been established. The video data is a video captured by the camera mounted on the mobile terminal 100. The remote control terminal 200 transmits, for example, a command for operating the mobile terminal 100 to all the networks simultaneously according to the operation of the remote operator. Each command is given a time stamp indicating when the command was transmitted. The time stamps are used to identify whether or not the operation commands are the same.

After the connection is established, the controller 110 sorts the commands placed in the integrated command queue 1041 in order of time stamp as a function of the processor 103 (S101). A command without a time stamp is always placed at the top of the integrated command queue 1041. For example, no time stamp is given to all commands transmitted from the MEC servers 310 or a specific command (interrupt command) transmitted from each of the MEC servers 310. The top of the integrated command queue 1041 is a position where a command is extracted first from the integrated command queue 1041.

Sorting processing will be described.

In the time stamp method, for example, when certain data is lost, data to which a time stamp of a time later than a time stamp given to the lost command (data) is given is received earlier. In that case, the received command is processed earlier. Then, when a command having a time stamp of a time earlier than that of the executed command is received later, the command is discarded (steps S104 and S106 described later).

Each command is received from a plurality of networks. Therefore, before a command received earlier is executed, another command having a time stamp of a time earlier than that of the command may be received later. In such a case, the plurality of commands before the execution are arranged in order of time stamp by the sorting processing in S101.

However, an interrupt command without a time stamp is an exception to the sort processing. Only the interrupt command is reordered by sorting and placed at the top of the integrated command queue 1041.

Subsequently, the controller 110, as a function of the processor 103, acquires a command from the top of the integrated command queue 1041 (S102).

Subsequently, the controller 110 determines whether or not the acquired command includes a time stamp (S103). A command without a time stamp is an interrupt processing command such as an emergency stop.

In a case where no time stamp is present in step S103 (S103: NO), the controller 110 immediately executes the command (S105). Since a command without a time stamp is an interrupt processing command such as an emergency stop as described above, the immediate execution of the command can cause the mobile terminal 100 to perform an emergency stop or interrupt processing.

In a case where the time stamp is present in step S103 (S103: YES), the controller 110 compares the information S1 with the information S2 (S104). As described above, the information S1 is the time stamp of the command executed last, and the information S2 is the time stamp of the next command acquired from the integrated command queue 1041. Therefore, the information S2 is the time stamp of the data acquired by step S102 immediately before the execution of step S104.

In a case where S2 ≤ S1 is not satisfied in step S104 (S104: NO), subsequently, the controller 110 executes the acquired command (S105). The case where S2 ≤ S1 is not satisfied (S104: NO) is a case where the time of the time stamp (information S2) of the next command acquired from the integrated command queue 1041 indicates a later time than the time of the time stamp (information S1) of the command executed last.

In a case where S2 ≤ S1 in step S104 (S104: YES), subsequently, the controller 110 discards the acquired command (S106). The case where S2 ≤ S1 (S104: YES) is a case where the time of the time stamp (information S1) of the command executed last is the same as the time of the time stamp (information S2) of the next command acquired from the integrated command queue 1041. Alternatively, the case where S2 ≤ S1 is a case where the time of the time stamp (information S2) of the next command acquired from the integrated command queue 1041 indicates an earlier time than the time stamp (information S1) of the command executed last.

Thereafter, when an end instruction is given (S107: YES), the controller 110 ends the process. On the other hand, when no end instruction is given (S107: NO), the controller 110 returns to step S101 and continues the subsequent procedure.

### (Sequence number method)

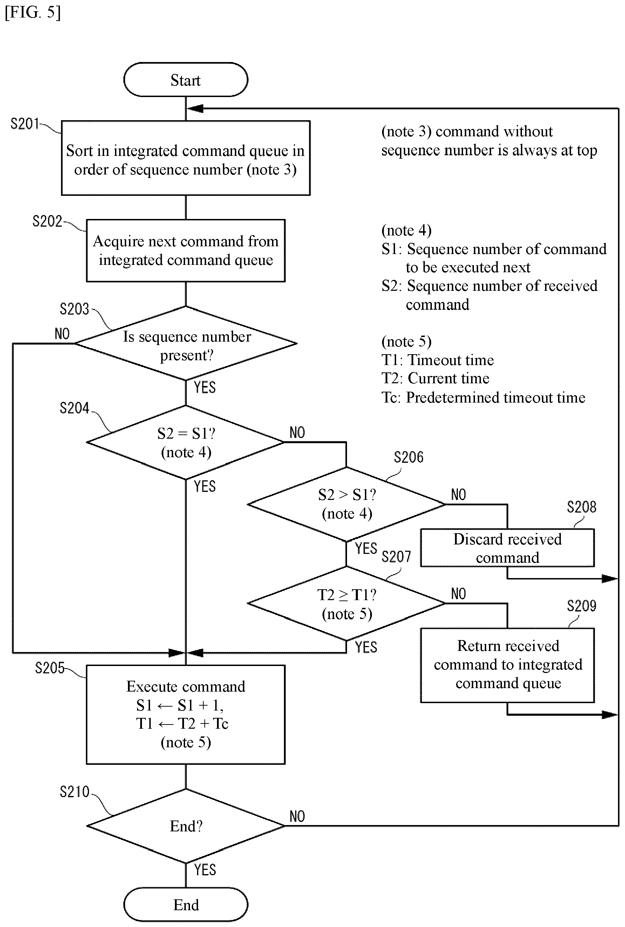

Fig. 5 is a flowchart for illustrating a procedure of communication control by the sequence number method. The communication control is performed by the controller 110 executing the program created according to the procedure described here.

First, in the controller 110, the connection section 101 connects to the plurality of networks 500 via the nearest wireless communication station 400 by the plurality of communication units. The connection operation by the connection section 101 is the same as that in the case of the above-described time stamp method. At this time, a sequence number given to a command is also stored together with the command.

After the connection is established, the controller 110, as a function of the processor 103, sorts commands placed in the integrated command queue 1041 in order of sequence number (S201). At this time, a command without a sequence number is always placed at the top of the integrated command queue 1041. For example, no sequence number is given to all commands transmitted from the MEC servers 310 or a specific command (interrupt command) transmitted from each of the MEC servers 310.

In the sequence number method, a sorting operation is executed as follows. Here, the first communication unit 111 will be described as Ch1 and the second communication unit 112 will be described as Ch2. Furthermore, for example, when commands are received in Ch1, a command with a sequence number 1 is denoted as 1-1, a command with a sequence number 2 is denoted as 1-2, and a command with a sequence number 3 is denoted as 1-3, ---. Similarly, when commands are received in Ch2, a command with the sequence number 1 is denoted as 2-1, a command with the sequence number 2 is denoted as 2-2, and a command with the sequence number 3 is denoted as 1-3, ---. The sequence numbers are given to the commands at the time of transmission or before transmission. Therefore, the sequence numbers are unique.

In such a case, for example, it is assumed that 1-1, 2-1, 1-3, and 1-4 are placed in the integrated command queue 1041 from the left in the time series order at the time of the reception. In this state, the commands having the sequence number 1 have been received from Ch1 and 2Ch. On the other hand, at this time, the commands with the sequence number 2 have not been received.

Thereafter, when the command having the sequence number 2 (i.e., 2-2) is received in Ch2, 1-3 and 1-4 are received earlier, and 2-2 is received later.

Therefore, next, sorting by sequence number is executed, and thus 1-1, 2-1, 2-2, 1-3, and 1-4 are arranged in the integrated command queue 1041. Then, 2-1, which is a command having the duplicate sequence number and is received later, is discarded (S204, S206, and S208, which will be described later).

Furthermore, in a case where the command with the sequence number 2 is not received in the above-described state (1-1, 2-1, 1-3, and 1-4) of the integrated command queue 1041, 1-1 is processed, 2-1 is discarded, and 1-3 and 1-4 remain in the integrated command queue 1041.

In this state, it is assumed that the sequence number 2 is received by Ch2 during processing of 1-3 (during processing until command execution). That is, the integrated command queue 1041 changes to a state with 2-2 and 1-4. At this time, since the sequence number 2 has not been processed yet, the process enters a waiting state. Then, in the present embodiment, 1-3 is temporarily returned to the integrated command queue 1041 (S206, S207, and S209, which will be described later). At this time, sorting is performed again to arrange 2-2, 1-3, and 1-4. This means that, when the command is returned to the head as it is, 1-3 is processed again next, and the processing does not proceed until a timeout occurs. Therefore, in the present embodiment, when the command is returned to the integrated command queue 1041, the process returns to step S201, and sorting is performed on commands including the returned command.

Thus, the commands are always executed in order of sequence number by the sequence number method.

Subsequently, the controller 110, as a function of the processor 103, acquires a command from the head of the integrated command queue 1041 (S202).

Subsequently, the controller 110 determines whether or not a sequence number has been given to the acquired command (S203). A command having no sequence number is an emergency stop, an interruption process, or the like.

In a case where a sequence number has not been given in step S203 (S203: NO), the controller 110 immediately executes the command (S205).

In a case where the sequence number has been given in step S203 (S203: YES), the controller 110 compares the information S1 with the information S2 (S204). As described above, the information S1 in the sequence number method is the sequence number of the command to be executed next, and the information S2 is the sequence number of the received command. Therefore, the information S2 is the sequence number of the data acquired in step S202 immediately before step S204 is executed.

In step S204, in a case where S2 = S1 (S204: YES), subsequently, the controller 110 executes the acquired command. Further, the controller 110 updates S1 by incrementing S1 (S1 + 1 to S1). Furthermore, the controller 110 adds T2 and Tc to T1 (T2 + Tc to T1) and updates T1 (S205). T1 is a timeout time, T2 is a current time, and Tc is a predetermined timeout time.

In a case where S2 = S1 is not satisfied in step S204 (S204: NO), subsequently, the controller 110 determines whether or not S2 > S1 is satisfied (S206).

In a case where S2 > S1 in step S206 (S206: YES), subsequently, the controller 110 determines whether or not T2 ≥ T1 (S207). As described above, the information T1 is the timeout time, and the information T2 is the current time.

In a case where T2 ≥ T1 in step S207 (S207: YES), subsequently, the controller 110 proceeds to S205, executes the command, and updates S1 and T1 (S205).

In a case where S2 > S1 is not satisfied in step S206 (S206: NO), subsequently, the controller 110 discards the received command (S208). Thereafter, the controller 110 returns to step S201 and continues the subsequent procedure.

In a case where T2 ≥ T1 is not satisfied in step S207 (S207: NO), subsequently, the controller 110 returns the received command to the integrated command queue 1041 (S209). Thereafter, the controller 110 returns to step S201 and continues the subsequent procedure.

Thereafter, when an end instruction is given (S210: YES), the controller 110 ends the process. On the other hand, when no end instruction is given (S210: NO), the controller 110 returns to step S201 and continues the subsequent procedure.

### (Operations)

Operations of the mobile terminal 100 and the wireless communication system 1 according to the present embodiment will be described.

The mobile terminal 100 such as an automatic carrier or a drone is expected to be used for unmanned automatic delivery using a wireless technology or a computer control technology, unmanned imaging by a camera mounted thereon, or the like along with the improvement of the wireless technology or the computer control technology.

The mobile terminal 100 can autonomously travel/fly, but may be remotely controlled regardless of whether it is manual or automatic. Communication between the mobile terminal 100 and the remote control terminal 200 is enabled not only in a limited area using a dedicated band, but also by connecting to a worldwide network 510 such as the Internet 500 using 5G or the like for remote control.

A problem that arises when remote control is performed by performing wireless communication such as 5G is a delay due to roaming or handover.

Switching a cell or a base station (wireless communication station 400) with which the mobile terminal 100 is communicating, or switching an access point of WiFi is called handover. Furthermore, switching of communication from a certain telecommunications carrier's network 500 in which the mobile terminal 100 is present to a network 500 of another telecommunications carrier, or switching of wireless communication media, such as switching from 5G to WiFi, is called roaming.

Usually, it takes several 100 ms to several seconds to perform handover or roaming. For example, in the case of web browsing or streaming while buffering, these delay times are hardly noticeable. However, this may cause a serious problem in remote control. For example, in the case of performing an operation while viewing a remote video, a person (remote controller) feels discomfort when there is a delay greater than or equal to 100 ms. In addition, when handover or roaming occurs during remote control and communication is interrupted, a person (remote operator) may feel that control has become impossible.

Furthermore, in the future, such remote control will be performed on a machine-by-machine basis with the assistance of computer control using AI or the like, instead of being performed entirely by a person. Furthermore, in the remote control, when a person intrudes in the traveling direction of the mobile terminal 100 or the like and senses a danger, it becomes possible to automatically take an avoidance action by the determination of the AI.

In a case where such control is performed by a machine, the operation of the mobile terminal 100 may be hindered when there is a communication disconnection period of several 100 ms in remote control. Furthermore, communication is not possible during handover or roaming. Therefore, in the remote control, during this period, in order to receive all operation commands transmitted from the remote operator, it is necessary to perform retransmission or wait until communication is recovered. That is, in the remote control, the operation has to be performed in consideration of the time until a retransmitted or waited command reaches the mobile terminal 100 in addition to the time of handover or roaming.

Furthermore, 5G communication in Japan can also be used by a company or municipality, which is not a telecommunications carrier, using local 5G (private 5G abroad).

Even when the mobile terminal 100 is operated in the area of the local 5G, handover and roaming are required for the following reasons. Along with a shortage of usable frequency bands and an increase in speed and capacity of communication, radio waves having a short wavelength such as a millimeter wave will be used in the future. In the case of a radio wave having a short wavelength, when a shielding object is present, the radio wave does not easily go around, and a blind spot where the radio wave does not reach occurs. In addition, in the case of a radio wave having a short wavelength, the intensity of the radio wave is likely to be attenuated, and a communicable area becomes narrower. Therefore, when radio waves having a short wavelength are used, it is necessary to install more base stations.

An attempt has been made to solve such a problem by space division multiple access (SDMA) using a multi-antenna (for example, massive MIMO) technique or a beamforming technique.

However, it is not easy for a beam to track the mobile terminal 100 moving at high speed or to eliminate a blind spot of radio waves or a place where the intensity of radio waves is weak while suppressing radio wave interference in a momentarily changing situation. Therefore, even in such an environment, handover and roaming are still indispensable technologies in the future.

In the future, it is assumed that not only current AGVs and drones but also various forms of mobile terminals 100 are remotely controlled or automatically controlled by radio, and the mobile terminals 100 move at high speed between wireless communication areas. The faster it moves, the greater the problem of delays in handover and roaming. In addition, in order to smoothly move an arm or the like attached to the mobile terminal 100 during movement, it is required to minimize a delay.

In the present embodiment, when the mobile terminal 100 moves between networks 500 including a certain wireless communication station 400, communication can be seamlessly maintained and the remote control can be continued without being affected by the disconnection of the communication at the time of handover or roaming.

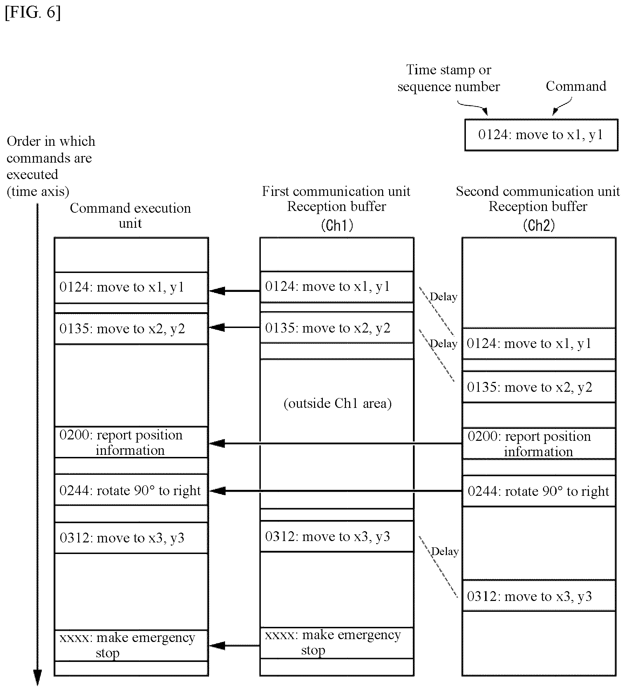

Fig. 6 is an explanatory diagram for illustrating an example of a process by the mobile terminal 100.

In Fig. 6, it is assumed as follows. The mobile terminal 100 can communicate with both the local 5G station 401 and the carrier 5G station 404.

The local 5G station 401 has a low signal delay. However, the communicable range of the local 5G station 401 is narrow. Therefore, when the mobile terminal 100 moves, the connection between the mobile terminal 100 and the local 5G station 401 may be disconnected. When the connection is disconnected, the mobile terminal 100 cannot receive all transmitted commands.

On the other hand, the carrier 5G station 404 has a greater signal delay than that of the local 5G station 401. The carrier 5G station 404 has a communication range wider than that of the local 5G station 401. Therefore, even when the mobile terminal 100 moves, there is a low possibility that the connection between the mobile terminal 100 and the carrier 5G station 404 is disconnected. Therefore, the mobile terminal 100 can reliably receive a command.

In Fig. 6, the mobile terminal 100 is connected to the local 5G station 401 via the first communication unit 111 as Ch1 of 5G for communication with the local 5G station 401. The mobile terminal 100 is connected to the carrier 5G station 404 via the second communication unit 112 as Ch2 of 5G for communication with the carrier 5G station 404.

Commands with the same time stamp are simultaneously transmitted from the remote control terminal 200 to the respective networks 500. They are transmitted to the respective networks 500 simultaneously. However, as described above, delay times of signals are different between the network 500 having the local 5G station 401 and the network 500 having the carrier 5G station 404. Therefore, the mobile terminal 100 receives the same command at different times in Ch1 and Ch2.

Here, first, it is assumed that the mobile terminal 100 is located at a position where the mobile terminal 100 is connectable to both the local 5G station 401 and the carrier 5G station 404 (position A in Fig. 1). Then, the mobile terminal 100 receives commands with time stamps 0124 and 0135 from Ch1 for the first time. The commands with the time stamps 0124 and 0135 from Ch1 are temporarily stored in the reception buffer 1111 of the first communication unit 111. Thereafter, commands with the time stamp 0124 and 0135 are also received from Ch2. The commands with the time stamps 0124 and 0135 from Ch2 are temporarily stored in the reception buffer 1111 of the second communication unit 112.

Then, in the present embodiment, the command execution unit 1031 (processor 103) executes the commands received earlier from Ch1 and having the time stamps 0124 and 0135 by the procedure of the communication control described above. On the other hand, the commands received later from Ch2 and having the time stamps 0124 and 0135 are discarded.

Thereafter, it is assumed that the mobile terminal 100 goes out of the local 5G area 4011 (position B in Fig. 1). Even when the mobile terminal 100 goes out of the local 5G area 4011, the mobile terminal 100 is present in the carrier area 4041.

In this state, a command with a time stamp 0200 is transmitted from the remote control terminal 200.

Then, the mobile terminal 100 cannot receive a command from Ch1. On the other hand, it can receive a command from CH2. Therefore, the command with the time stamp 0200 received from CH2 is temporarily stored in the reception buffer 1111 of the second communication unit 112. The command with the time stamp 0200 is executed by the command execution unit 1031.

Subsequently, the mobile terminal 100 similarly receives a command with a time stamp 0244 in Ch2. At this time, the mobile terminal 100 is still outside of the local 5G area 4011. The mobile terminal 100 executes the command with the time stamp 0244 as it is.

When the mobile terminal 100 returns to the local 5G area 4011 again, the mobile terminal 100 receives a command with a time stamp 0312 from Ch1. When the mobile terminal 100 receives the command with the time stamp 0312, the mobile terminal 100 executes the command. A command with the time stamp 0312 is received later from Ch2, but this is discarded.

As described above, the mobile terminal 100 according to the present embodiment executes a command received earlier in Ch1 or Ch2. When the mobile terminal 100 goes out of the local 5G area 4011, the mobile terminal 100 receives and executes a command from the carrier 5G station 404 and from Ch2. During this time, the communication from the local 5G station 401 is interrupted, but the communication from the carrier 5G station 404 is continued. Therefore, since new roaming or handover does not occur with the movement of the mobile terminal 100, a delay in the acquisition of data due to roaming or handover does not occur.

The case of the time stamp method has been described above. Sequence numbers can also be used instead of time stamps.

Here, the numerical values of the time stamps in Fig. 6 will be described as sequence numbers.

In the sequence number method, the mobile terminal 100 executes commands in order of sequence number. Commands with the same sequence number are simultaneously transmitted from the remote control terminal 200 to the respective networks 500 in the same manner as in the time stamp method.

Here, it is also assumed that the mobile terminal 100 is located at a position where the mobile terminal 100 is connectable to both the local 5G station 401 and the carrier 5G station 404 (position A in Fig. 1). Then, the mobile terminal 100 executes commands with sequence numbers 0124 and 0135 received first from Ch1. The mobile terminal 100 discards commands with the same sequence numbers 0124 and 0135 received later from Ch2. Therefore, also in the sequence number method, only a command having a sequence number that is received first is executed, and even when a command having the same sequence number is received later, the command is discarded.

The subsequent processing is similar to that in the time stamp method, and when the mobile terminal 100 is connected to any one of the networks 500, the mobile terminal 100 executes a command received from the network 500. When the mobile terminal 100 is connected to a plurality of networks 500, the mobile terminal 100 executes only a command received first.

Further, for example, in the sequence number method, when a command with a sequence number 0245 after a sequence number 0244 is present, the command cannot be received in Ch1. Thereafter, when the mobile terminal 100 returns to the local 5G area 4011, after the command with the sequence number 0244 is executed, a command with a sequence number 0312 is received from Ch1 and is executed. In the sequence number method, a command with the sequence number 0245 may be received with a delay from Ch2.

In such a case, the time stamp 0312 has already been executed in the above-described time stamp method. A time stamp 0245 indicates a time earlier than the time stamp 0312. Therefore, the command with the time stamp 0245 that is received later is not executed.

On the other hand, in the sequence number method, when the sequence number of the command received first does not match the sequence number to be executed next, the mobile terminal 100 may perform standby processing on the command received first. In the case of the standby processing, the command with the sequence number 0312 received earlier from Ch1 is passed to the standby processing. The standby processing is processing of waiting for reception of the sequence number 0245 to be executed next to the executed sequence number 0244.

When the mobile terminal 100 receives the command with the sequence number 0245 later from Ch2, the mobile terminal 100 executes the command. Thereafter, after time-out occurs without reception of commands with sequence numbers 0246 to 0311, the mobile terminal 100 executes the command with the sequence number 0312 that has been passed to the standby processing.

In this way, in the sequence number method, in a case where it is identified that a command that has not been received due to the mismatch of numbers is present, the execution of the standby processing can prevent omission of execution of a command.

It is to be noted that whether to adopt the time stamp method in which execution is performed with a low delay or the sequence number method in which certainty (order) of execution of a command is taken into consideration is arbitrarily selected in accordance with the configuration, operability, operation contents, and the like of the mobile terminal 100.

In the configurations of the networks 500, as described above, the MEC servers 310 can be arranged between the remote control terminal 200 and the mobile terminal 100. Each of the MEC servers 310 temporarily receives a command from the remote control terminal 200 and relays the command to the mobile terminal 100. Furthermore, the MEC servers 310 are not limited to such a relaying operation. Each of the MEC servers 310 can transmit an individual command to the mobile terminal 100, separately from the command from the remote control terminal 200.

In this case, for example, it is assumed that a command "xxxx: make emergency stop" is transmitted from the first MEC server 311 to the mobile terminal 100.

The mobile terminal 100 receives the command "xxxx: make emergency stop" without a time stamp from Ch1. In a case where a time stamp is not appended, the command is immediately executed as an interrupt command regardless of the execution status of other commands. Thus, the mobile terminal 100 stops its functions including reception of data from the other networks 500.

The transmission of such a command according to the determination of each of the MEC servers itself is performed independently of the determination of the remote operator. The transmission of the command is determined by the MEC server 310 located close to the mobile terminal 100 using, for example, AI. Therefore, the command is transmitted from a position that is close to the mobile terminal 100 both physically and in terms of a communication path. Therefore, in a case where an abnormal situation occurs, the mobile terminal 100 can be stopped immediately. Note that the transmission of the command "xxxx: make emergency stop" from the first MEC server 311 is merely an example. When a command without a time stamp or a sequence number is transmitted from another MEC server 310, the mobile object management server 300, or the remote control terminal 200, the mobile terminal 100 immediately executes the command.

Next, roaming and handover according to the present embodiment will be described. Here, the present embodiment in which a plurality of networks 500 are connected simultaneously and a comparative example in which only one network 500 is always connected will be described in comparison.

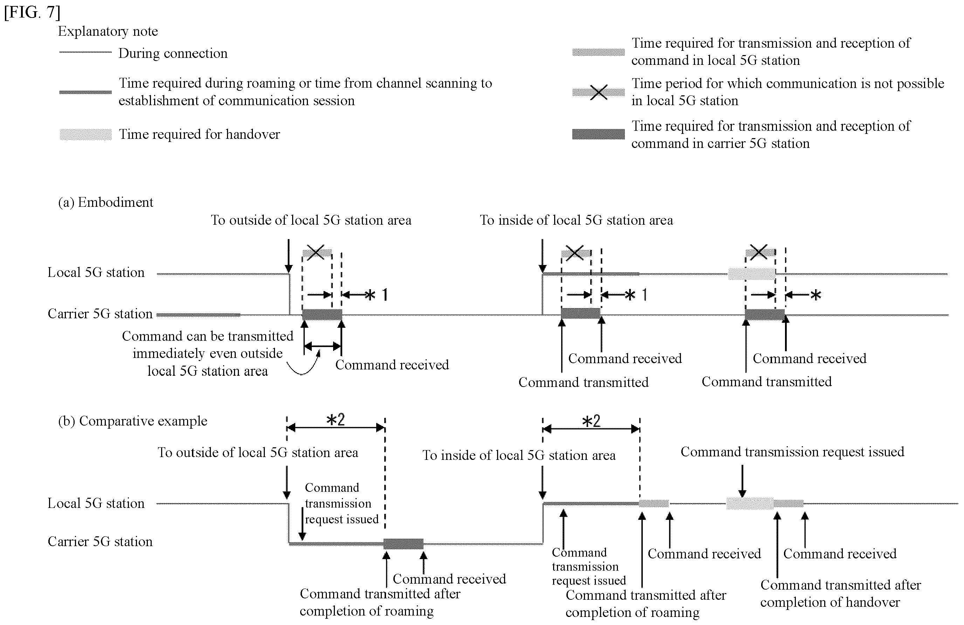

Fig. 7 is a time chart for illustrating roaming and handover, (a) indicates a case of the present embodiment, and (b) indicates a case of the comparative example.

Here, it is assumed that the local 5G station 401 has lower transmission and reception latencies than those of the carrier 5G station 404. Furthermore, Fig. 7 illustrates a case of roaming to the carrier area 4041 from the local 5G area 4011 and a case of handover within the local 5G station 401. It is assumed that the systems themselves of the local 5G station 401 and the carrier 5G station 404 have the same performance in the case of the present embodiment and in the case of the comparative example.

In the case of the present embodiment, as illustrated in Fig. 7(a), communication connections (communication sessions) have been established with both the local 5G station 401 and the carrier 5G station 404 in advance. Therefore, in the case of the present embodiment, roaming does not occur, and a delay time is only the difference in transmission and reception latency between the local 5G station 401 and the carrier 5G station 404. Thereafter, also in a case where a communication request is executed while the mobile terminal 100 leaves the local 5G area 4011 and waits for establishment of a communication session again, the delay time is the same because a communication session with the carrier 5G station 404 has been established at that time.

On the other hand, in the case of the comparative example, as illustrated in Fig. 7(b), a command is transmitted after completion of roaming. Therefore, in the case of the comparative example, the reception of the command is delayed by a time obtained by adding the difference in transmission and reception latency between the local 5G station 401 and the carrier 5G station 404 to the time required from the generation of a request for transmission to the completion of roaming (*2).

Further, the delay time in the case of the present embodiment is only the difference in transmission and reception latency between the local 5G station 401 and the carrier 5G station 404. Therefore, in the case of the present embodiment, the time required for handover is not affected.

On the other hand, in the case of the comparative example, a command is transmitted after handover is completed. Therefore, in the case of the comparative example, the reception of the command is delayed by the time required from the generation of a request for transmission to the completion of handover.

From these, it is found that the delay time (* 1) that occurs in the present embodiment is extremely shorter than the delay time (*2) that occurs in the comparative example.

Next, communication patterns between the remote control terminal 200 and the mobile terminal 100 according to the present embodiment will be described.

There are two communication patterns between the remote control terminal 200 and the mobile terminal 100. In the first communication pattern, a command necessary for remote control is transmitted as data from the remote control terminal 200 to the mobile terminal 100. In the second communication pattern, requested data is transmitted from the remote control terminal 200 to the mobile terminal 100 based on a request from the mobile terminal 100.

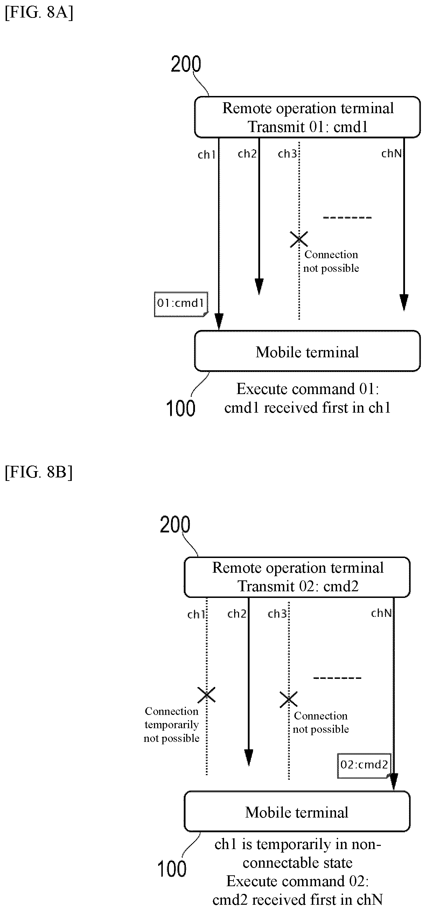

First, the first communication pattern will be described. Figs. 8A to 8D are explanatory diagrams for illustrating the first communication pattern performed between the remote control terminal 200 and the mobile terminal 100.

The paths of the networks 500 in this case are Ch1, Ch2, Ch3, and --- ChN. Latencies are Ch3 < Ch1 < ChN < Ch2. Communicable ranges are Ch2 > ChN > Ch1 > Ch3.

In Fig. 8A to Fig. 8D, the remote control terminal 200 transmits a command with a time stamp to all the networks 500 (Ch1 to ChN) in order to transmit the command to the mobile terminal 100.

Fig. 8A illustrates a state in which Ch3 is in a non-connectable state. In this state, a command that has passed through the network 500 for Ch1 reaches the mobile terminal 100 the fastest. The mobile terminal 100 executes a command 01:cmd1 received from Ch1. Thereafter, when the command 01:cmd1 reaches the mobile terminal 100 from another network 500, the mobile terminal 100 discards the received command.

Fig. 8B illustrates a state in which Ch1 is not connectable from the state illustrated in Fig. 8A. In this state, a command that has passed through the network 500 for ChN reaches the mobile terminal 100 the fastest. The mobile terminal 100 executes a command 02:cmd2 received from ChN. Thereafter, when the command 02:cmd2 reaches the mobile terminal 100 from another network 500, the mobile terminal 100 discards the received command.

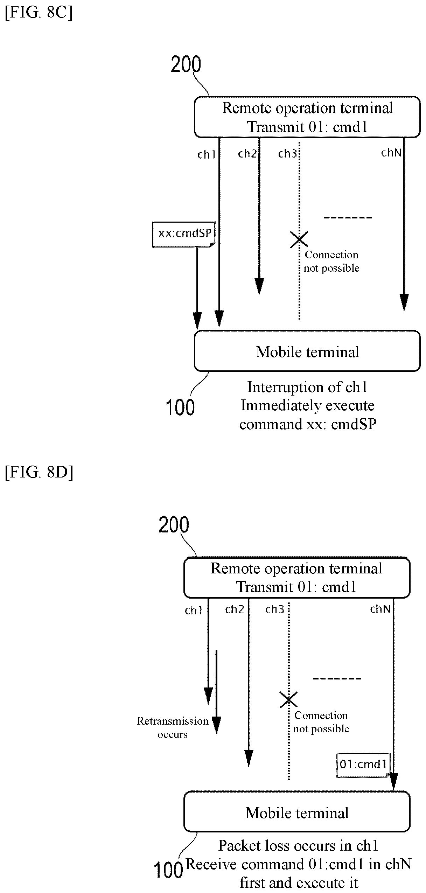

Fig. 8C illustrates a state in which an interrupt command xx:cmdSP without a time stamp is received from Ch1. In this state, the interrupt command xx:cmdSP that has passed through via the network 500 for Ch1 reaches the mobile terminal 100. The mobile terminal 100 immediately executes the interrupt command xx:cmdSP. When the interrupt command xx:cmdSP is an emergency stop command, the mobile terminal 100 stops.

Fig. 8D illustrates a state in which re-transmission occurs due to packet loss in Ch1, and as a result, a command 01:cmd1 of ChN arrives first.

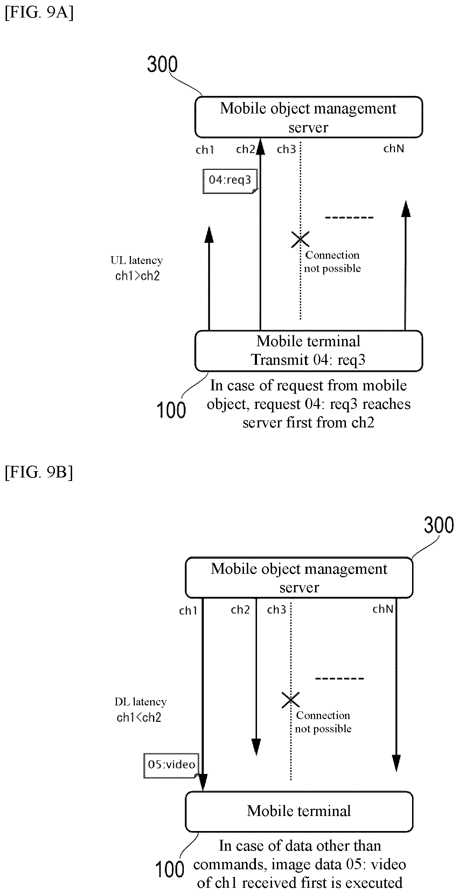

Next, the second communication pattern will be described. Figs. 9A and 9B are explanatory diagrams for illustrating the second communication pattern performed between the remote control terminal 200 and the mobile terminal 100.

The paths of the networks 500 in the second communication pattern are Ch1, Ch2, Ch3, and --- ChN. The communication speed in uplink is different from the communication speed in downlink. The uplink is communication when data is transmitted from the mobile terminal 100 to the remote control terminal 200 or the mobile object management server 300. The downlink is communication when data is transmitted from the remote control terminal 200 or the mobile object management server 300 to the mobile terminal 100.

For example, the communication speeds in the uplink and the downlink in the network 500 for Ch1 are asymmetrical. The uplink in the network 500 for Ch1 has a low speed and a high delay. On the other hand, the downlink has a high speed, a large capacity, and a low latency.

The communication speeds in the uplink and the downlink in the network 500 for Ch2 are symmetrical. The network 500 for Ch2 has a medium speed, a medium capacity, and a medium delay for both the uplink and the downlink.

The communication speeds in the uplink and the downlink in the network 500 for Ch3 are symmetrical. The network 500 for Ch3 has a medium speed, a medium capacity, and a medium delay for both the uplink and the downlink, similar to Ch2.

The communication speeds in the uplink and the downlink in the network 500 for ChN are symmetrical. The network 500 for ChN has a high speed, a high capacity, and a low delay for both the uplink and the downlink.

That is, uplink latencies are Ch2 < ChN < Ch3 < Ch1, and downlink latencies are Ch1 < ChN < Ch3 < Ch2.

Note that the communicable ranges are Ch2 > Ch1 > ChN > Ch3. Note that communication is not possible in Ch3.

Fig. 9A illustrates a state in which a data request has been made from the moving object to the mobile object management server 300. In addition, Ch3 is in a non-connectable state. In Fig. 9A, the mobile terminal 100 transmits the data request to all the networks 500 (Ch1 to ChN) in order to transmit the data request to the mobile object management server 300.

In this state, a data request 04:req3 that has passed through the network 500 for Ch2 reaches the mobile object management server 300 the fastest. The mobile object management server 300 transmits requested data to the mobile terminal 100. Furthermore, when the data request 04:req3 reaches the mobile object management server 300 from another network 500 afterwards, the mobile object management server 300 discards the received data request. Such processing of discarding the data request that has arrived later is performed similarly to the procedure of the communication control in the mobile terminal 100 described above.

Fig. 9B illustrates a state of data transmission from the mobile object management server 300 to the mobile terminal 100. Also at this time, Ch3 is in a non-connectable state.

In this state, video data 05:video that has passed through the network 500 for Ch1 reaches the mobile terminal 100 the fastest. The mobile terminal 100 immediately processes the video data 05:video. Furthermore, when the video data 05:video reaches the mobile terminal 100 from another network 500 afterwards, the mobile terminal 100 discards the received video data.

As the use of the video data, for example, use of camera video obtained by capturing an image of a place invisible from the autonomously moving mobile terminal 100 is assumed. The video of the camera is received by the mobile object management server 300. The mobile terminal 100 requests the mobile object management server 300 to provide the video data captured by the camera. The mobile terminal 100 can analyze and predict in advance the movement of a person or an object entering a course at a position invisible from the mobile terminal 100 from the received video data, and autonomously take an avoidance action.

The determination of the avoidance action or the like using the received video data is executed by, for example, autonomous movement AI installed in the mobile terminal 100. Note that in the case of the video data, the data amount is large, so adding a time stamp may reduce processing efficiency. In such a case, the video data may be transmitted without a time stamp. The mobile terminal 100 that has received video data without a time stamp first executes processing related to the video data as in the case of the interrupt processing.

Furthermore, in the second communication pattern, as another example, it is assumed that the mobile terminal 100 leaves the wireless communication areas of Ch1 and Ch2 after transmitting a request command from the network 500 for Ch1. In this case, the mobile terminal 100 can receive the video data via the network 500 for Ch3 to which the mobile terminal 100 is connected at that time.

In this way, in the second communication pattern, it is possible to perform operation using different communication paths for the uplink and the downlink.

Note that roaming and handover do not occur or occur extremely infrequently in the second communication pattern as well.

Although the embodiment of the present invention has been described above, the present invention is not limited to the above-described embodiment.

The above-described embodiment has been described with the example of the method in which, for the connection between the mobile terminal 100 and the networks 500, the request is issued from the mobile terminal 100 to the mobile object management server 300 and is registered (stored), and then the connection is established, but the present invention is not limited thereto. For example, in the connection between the mobile terminal 100 and the networks 500, the mobile object management server 300 may search for the mobile terminal 100 and attempt to connect to the mobile terminal 100. The mobile object management server 300 can search for the mobile terminal 100 based on, for example, video of a monitoring camera or position information issued by the mobile terminal 100.

Furthermore, the connection between the remote control terminal 200 and the mobile terminal 100 (or between the MEC server and the mobile terminal 100) may be maintained for a certain period of time even after the mobile terminal 100 moves out of a target wireless communication area. This is because, in a case where the mobile terminal 100 can be connected to only one network 500, roaming or handover immediately occurs when the mobile terminal 100 moves out of the wireless communication area. In this respect, in the embodiment, it is possible to evaluate situations such as a situation in which the connection of wireless communication serving as a backup continues (at least is not disconnected) and a situation in which it is advantageous to select which network 500 to connect in terms of delay, and it is possible to prevent frequent switching from occurring based on the evaluation.

Further, the reason why the mobile object management server 300 is provided is for the centralized management of information and security. For example, the remote control terminal 200 may not be able to grasp which mobile terminal 100 is present, where the mobile terminal 100 is present, and how many mobile terminals 100 are present. In such a case, the mobile terminal 100 is not able to grasp, in advance, which remote control terminal 200 should be relied on for communication connection to receive data (e.g., a command). The mobile object management server 300 stores connection information and the like from the remote control terminal 200 and the mobile terminal 100 in advance. Thus, the remote control terminal 200 and the mobile terminal 100 can be connected to each other with trust in the registered content of the mobile object management server 300.

In addition, in the above-described embodiment, the example in which the 5G wireless communication base stations are used as the wireless communication stations 400 has been described. However, in the present invention, for example, 3G, 4G (LTE), and 5G wireless communication base stations may be provided in a mixed manner, and wireless communication stations 400 other than 3G, 4G (LTE), and 5G may be further provided.

Further, the information processing program according to the present invention can be implemented by a dedicated hardware circuit. Furthermore, the information processing program may be provided by a computer-readable recording medium such as a universal serial bus (USB) memory or a digital versatile disc (DVD)-read only memory (ROM), or may be provided online via a network 500 such as the Internet 510 without using a recording medium. When this data input control program is provided online, the data input control program is recorded in a recording medium such as a magnetic disk in a computer connected to the network 500.

The present invention can be further modified in various manners based on the configurations described in the claims, and those modifications examples are also within the scope of the present invention.

The present application is based on Japanese Patent Application (Japanese Patent Application No. 2021-204802) filed on December 17, 2021, the disclosure content of which is incorporated by reference in its entirety.

### Reference Signs List

- 1: wireless communication system
- 100: mobile terminal
- 101: connection section
- 102: transceiver
- 103: processor
- 104: storage
- 110: controller
- 111: first communication unit
- 112: second communication unit
- 11: nth communication unit
- 120: sensor section
- 130: driver
- 200: remote control terminal
- 300: mobile object management server
- 310: MEC server
- 311: first MEC server
- 312: second MEC SERVER
- 313: third MEC server
- 400: wireless communication station
- 401: local 5G station
- 402: millimeter-wave local 5G station
- 403: WiFi AP
- 404: carrier 5G station
- 500: network
- 501: local 5G network
- 502: millimeter-wave local 5G network
- 503: WiFi network
- 504: carrier 5G network
- 510: Internet
- 1111: reception buffer
- 1112: transmission buffer
- 4011: local 5G area
- 4021: millimeter-wave local 5G area
- 4031: WiFi area
- 4041: carrier area

## Claims

1. A mobile terminal that moves while wirelessly communicating with an external device, the mobile terminal comprising:
a connection section that connects to a plurality of wireless networks simultaneously;
a receiver that receives data regarding the movement of the mobile terminal from the plurality of wireless networks connected by the connection section; and
a processor that executes only the data received first for the same data received via the plurality of wireless networks.

2. The mobile terminal according to claim 1, wherein the data includes at least one of a command for moving the mobile terminal and data for autonomous movement.

3. The mobile terminal according to claim 1 or 2, wherein
the data includes time-series information given at a time of transmission of the data, and
the processor executes the data based on the time-series information without duplicating the data.

4. The mobile terminal according to claim 3, wherein the time-series information includes a time stamp or a sequence number.

5. The mobile terminal according to claim 3 or 4, wherein when the data that does not include the time-series information is received, the processor immediately executes the data.

6. The mobile terminal according to any one of claims 1 to 5, wherein the data is at least one of remote control data for remotely controlling the mobile terminal and autonomous movement data for autonomous movement of the mobile terminal.

7. The mobile terminal according to any one of claims 1 to 6, wherein
the processor generates a data request for the mobile terminal to autonomously move and includes a transmitter that transmits the data request to the plurality of wireless networks connected by the connection section, and
the data request includes time-series information.

8. A wireless communication system comprising:
the mobile terminal according to any one of claims 1 to 7;
a plurality of wireless networks including a wireless communication station; and
an information processing apparatus connected to the wireless networks.

9. The wireless communication system according to claim 8, wherein the information processing apparatus transmits the same data to the plurality of wireless networks.

10. The wireless communication system according to claim 8 or 9, wherein the wireless networks include a neighboring apparatus that relays communication between the mobile terminal and the information processing apparatus.

11. The wireless communication system according to claim 10, wherein the neighboring apparatus transmits data originated from the neighboring apparatus to the mobile terminal.

12. The wireless communication system according to any one of claims 8 to 11, further comprising a distribution server that copies the data transmitted by the information processing apparatus and transmits the copied data to the mobile terminal, wherein
the distribution server is connected to the plurality of wireless networks and transmits the same data to the plurality of wireless networks.

13. The wireless communication system according to claim 10, wherein
a mobile object management server that performs authentication necessary for the mobile terminal and the information processing apparatus and/or the neighboring apparatus to connect to each other is connected to the wireless networks,
the mobile terminal registers connection information indicating the connection to the plurality of wireless networks in the mobile object management server that has performed the mutual authentication, and the information processing apparatus or the neighboring apparatus acquires the connection information from the mobile object management server, performs mutual authentication with the mobile terminal, and connects to the mobile terminal.

14. A communication control program for a mobile terminal that moves while wirelessly communicating with an external device, the communication control program causing a computer to execute:
(a) connecting to a plurality of wireless networks simultaneously;
(b) receiving data regarding the movement of the mobile terminal from the plurality of wireless networks connected in (a); and
(c) executing only the data received first for the same data received via the plurality of wireless networks.

15. The communication control program according to claim 14, wherein the data includes at least one of a command for moving the mobile terminal and data for autonomous movement.

16. The communication control program according to claim 14 or 15, wherein the data includes time-series information given at a time of transmission of the data, and (c) executes the data based on the time-series information without duplicating the data.

17. The communication control program according to claim 16, wherein the time-series information includes a time stamp or a sequence number.

18. The communication control program according to claim 16 or 17, wherein when the data that does not include the time-series information is received, (c) immediately executes the data.

19. The communication control program according to any one of claims 14 to 18, wherein the data is at least one of remote control data for remotely controlling the mobile terminal and autonomous movement data for autonomous movement of the mobile terminal.

20. The communication control program according to any one of claims 14 to 19, further comprising:
(d) generating a data request for the mobile terminal to autonomously move; and
(f) transmitting the data request to the plurality of wireless networks connected in (a), wherein
the data request includes time-series information.
